(19) Europäisches Patentamt
European Patent Office
Office européen des brevets

(11) EP 3 493 390 A1

(12) EUROPEAN PATENT APPLICATION
published in accordance with Art. 153(4) EPC

(43) Date of publication:
05.06.2019 Bulletin 2019/23

(51) Int Cl.:
*H02M 7/48* (2007.01)

(21) Application number: 17918689.5

(22) Date of filing: 07.09.2017

(86) International application number:
PCT/JP2017/032334

(87) International publication number:
WO 2019/049284 (14.03.2019 Gazette 2019/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: NSK Ltd.
Tokyo 141-8560 (JP)

(72) Inventor: URYU, Kyosho
Tokyo 141-8560 (JP)

(74) Representative: Luten, Martin Haaije et al
Arnold & Siedsma
Bezuidenhoutseweg 57
2594 AC The Hague (NL)

(54) MOTOR CONTROL DEVICE AND ELECTRIC POWER STEERING DEVICE EQUIPPED WITH SAME

(57) [Problem]
An object of the present invention is to provide a motor control unit that accurately performs temperature detection of an inverter with a low cost configuration without time delay and surly overheat-protection-controls electronic components based on detection temperature, and an electric power steering apparatus equipped with the motor control unit.

[Means for solving the problem]
The present invention is the motor control unit that driving-controls a motor by an inverter based on a current command value, comprising: a voltage detecting section to detect a power supply voltage of a power supply connected to the inverter, a temperature detection device disposed on a wiring pattern of a circuit substrate between the inverter and the power supply, a voltage-dividing circuit to divide with the power supply voltage using the temperature detection device and resistors, a temperature detecting section to detect a temperature of the wiring pattern based on a dividing voltage from the voltage-dividing circuit and a voltage detected value detected in the voltage detecting section, and an overheat protection control section to limit the current command value based on a temperature detected value of the temperature detecting section, wherein the temperature detecting section detects the temperature of the wiring pattern using a predetermined equation or a data table in which data are preliminarily set without affecting the power supply voltage.

FIG. 5

**Description**

Technical Field

The present invention relates to a motor control unit having a function that a temperature of an inverter (a wiring pattern) which drives a motor is detected and an electronic component is prevented from overheat, and an electric power steering apparatus equipped with the motor control unit, in particular to the motor control unit that disposes a temperature detection device (for example, a thermistor) on the wiring pattern of a power supply line between the inverter and a power supply, detects the temperature without affecting a variation of a power supply voltage, and limits a current command value based on a temperature detected-value, and the electric power steering apparatus equipped with the above motor control unit.

Background Art

The electric power steering apparatus (EPS) is exemplified as an apparatus that is equipped with the motor control unit. The electric power steering apparatus which provides a steering system of a vehicle with a steering assist torque (an assist torque) by a rotational torque of a motor, applies the steering assist torque to a steering shaft or a rack shaft by means of a transmission mechanism such as gears by using a driving force of the motor which is controlled by electric power supplied from a power supplying section (an inverter). In order to accurately generate the steering assist torque, such a conventional electric power steering apparatus performs a feed-back control of a motor current. The feed-back control adjusts a voltage supplied to the motor so that a difference between a steering assist command value (a current command value) and a detected motor current value becomes small, and the adjustment of the voltage supplied to the motor is generally performed by an adjustment of duty command values of a pulse width modulation (PWM) control.

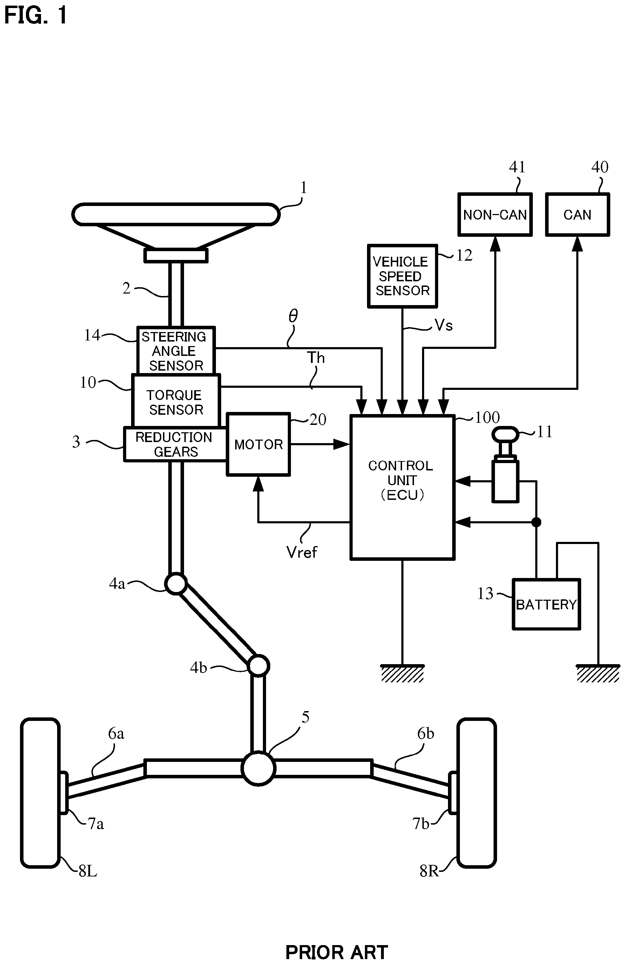

A general configuration of the conventional electric power steering apparatus will be described with reference to FIG.1. As shown in FIG.1, a column shaft (a steering shaft or a handle shaft) 2 connected to a handle (a steering wheel) 1 is connected to steered wheels 8L and 8R through reduction gears 3, universal joints 4a and 4b, a pinion-and-rack mechanism 5, and tie rods 6a and 6b, further via hub units 7a and 7b. In addition, the steering shaft 2 is provided with a torque sensor 10 for detecting a steering torque Th of the handle 1 and a steering angle sensor 14 for detecting a steering angle $\theta$, and a motor 20 for assisting the steering torque of the handle 1 is connected to the column shaft 2 through the reduction gears 3. The electric power is supplied to a control unit (ECU: Electronic Control Unit) 100 for controlling the electric power steering apparatus from a battery 13, and an ignition key signal is inputted into the control unit 100 through an ignition key 11. The control unit 100 calculates a current command value of an assist command (a steering assist command) on the basis of the steering torque Th detected by the torque sensor 10 and a vehicle speed Vs detected by a vehicle speed sensor 12, and controls a current supplied to the motor for the EPS 20 by means of a voltage control command value Vref obtained by performing compensation or the like to the current command value.

As well, the steering angle sensor 14 is not indispensable and may not be provided. It is possible to obtain the steering angle from a rotational position sensor which is connected to the motor 20.

The controller area network (CAN) 40 to send/receive various information and signals on the vehicle is connected to the control unit 100, and it is also possible to receive the vehicle speed Vs from the CAN 40. Further, a Non-CAN 41 is also possible to connect to the control unit 100, and the Non-CAN 41 sends and receives a communication, analogue/digital signals, electric wave or the like except for the CAN 40.

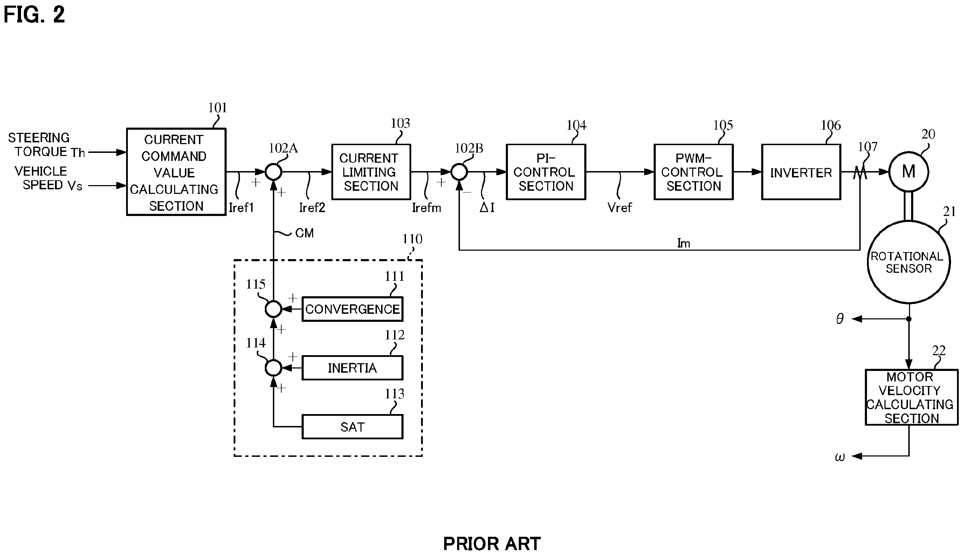

The control unit 100 mainly comprises a central processing unit (CPU) (including a micro processor unit (MPU) and a micro controller unit (MCU)), and general functions performed by programs within the CPU are, for example, shown in FIG.2.

The control unit 100 will be described with reference to FIG.2. As shown in FIG.2, the steering torque Th detected by the torque sensor 10 and the vehicle speed Vs detected by the vehicle speed sensor 12 (or from the CAN 40) are inputted into a current command value calculating section 101 which calculates the current command value Iref1. The current command value calculating section 101 calculates the current command value Iref1, based on the steering torque Th and the vehicle speed Vs with reference to an assist map or the like, which is a control target value of a current supplied to the motor 20. The calculated current command value Iref1 is inputted into a current limiting section 103 via an adding section 102A, and the current command value Irefm whose maximum current is limited is inputted into a subtracting section 102B. Adeviation $\Delta I$ (=Irefm-Im) between the current command value Irefm and a motor current value Im which is fed-back is calculated at the subtracting section 102B, and the deviation $\Delta I$ is inputted into aproportional-integral-control section (PI-control section) 104 for improving a current characteristic of the steering operation . The voltage control command value Vref that the characteristic is improved at the PI-control section 104, is inputted into a PWM-control section 105, and the motor 20 is PWM-driven through an inverter 106. The current value Im of the motor 20 is detected by a motor current detector 107 and is fed-back to the subtracting section 102B. The inverter 106 is constituted by a bridge circuit of field-effect transistors (FETs) as a semiconductor switching device.

The rotational sensor 21 such as the resolver is connected to the motor 20 and a motor rotational angle θ is outputted. Further, a motor velocity ω is calculated at a motor velocity calculating section 22.

Further, a compensation signal CM from a compensation signal generating section 110 is added at the adding section 102A. A characteristic compensation of the steering system is performed by adding the compensation signal CM, and a convergence, an inertia characteristic, and the like are improved. The compensation signal generating section 110 adds a self-aligning torque (SAT) 113 to an inertia 112 at an adding section 114. The added result is further added with a convergence 111 at an adding section 115. The added result at the adding section 115 is treated as the compensation signal CM.

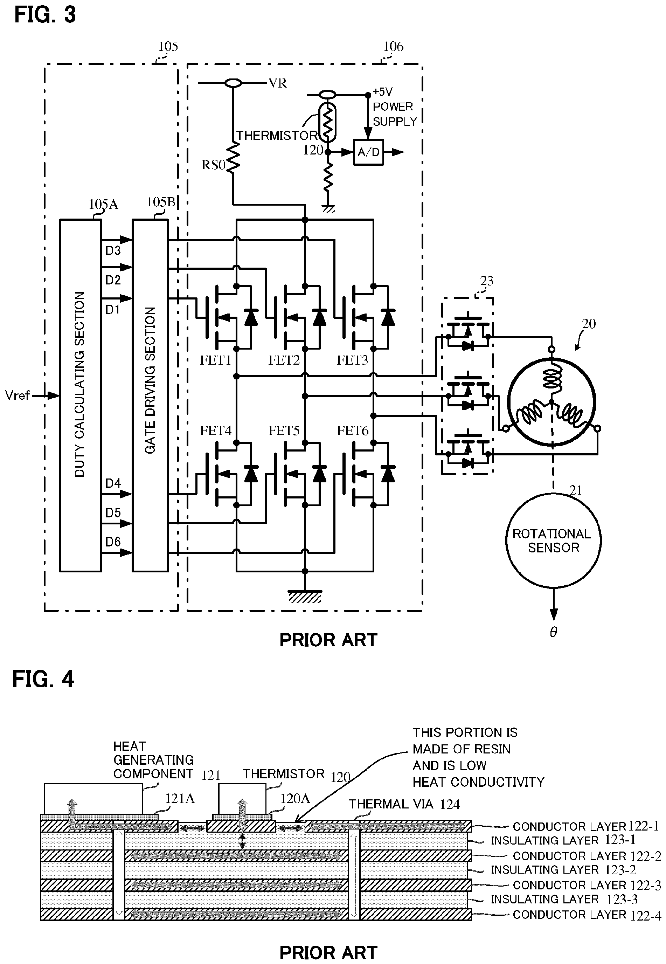

In a case that the motor 20 is a 3-phase brushless motor, details of the PWM-control section 105 and the inverter 106A have a configuration as shown in FIG.3, and the PWM-control section 105 comprises a duty calculating section 105A that calculates the PWM duty values D1 to D6 which are used in a 3-phase PWM-control by using the voltage control command value Vref in accordance with a predetermined equation, and a gate driving section 105B that drives gates of the FETs as the driving device (the power semiconductor device) by means of the PWM duty values D1 to D6 and turns-ON or turns-OFF the gates of the FETs for compensating a dead time. The inverter 106A is constituted by the 3-phase bridge of the FETs (e.g. n-type MOS (metal-oxide-semiconductor) -FET) as the semiconductor switching device, and the motor 20 is driven by turning-ON or turning-OFF the gates of the FETs by means of the PWM duty values D1 to D6. Motor relays 23 for supplying (ON) the electric power or interrupting (OFF) the electric power are connected to respective phases in the electric power supply lines between the inverter 106A and the motor 20.

As well, in FIG.3, the motor current detector 107 is omitted. As shown in FIG.3, a resistor RS0 is connected to a power supply side of the inverter 106A. Alternatively, the resistor is connected to a ground side, and the motor current can be detected by using one shunt method.

Generally, in the inverter used for driving the motor, the element components such as the capacitors, the FETs and a circuit substrate on which the capacitors, the FETs and the like are mounted generate the heat by resistance dissipation due to a passing current or switching dissipation. This heat causes an unstable operation of the inverter or a failure of the inverter. Conventionally, as shown in FIG.3, the temperature detection device such as the thermistor is disposed on the circuit substrate mounting the inverter, the thermistor 120 is connected to the stable power supply voltage (for example, 5 [V]), an analog to digital conversion (an A/D conversion) is performed to the voltage value of the thermistor, and then the temperature is detected. In order that the above temperature is not higher than a heat resistant temperature of the element components, when the detection temperature arrives at a predetermined temperature, the overheat protection mechanism in which the current is suppressed or the operation is stopped, is operated.

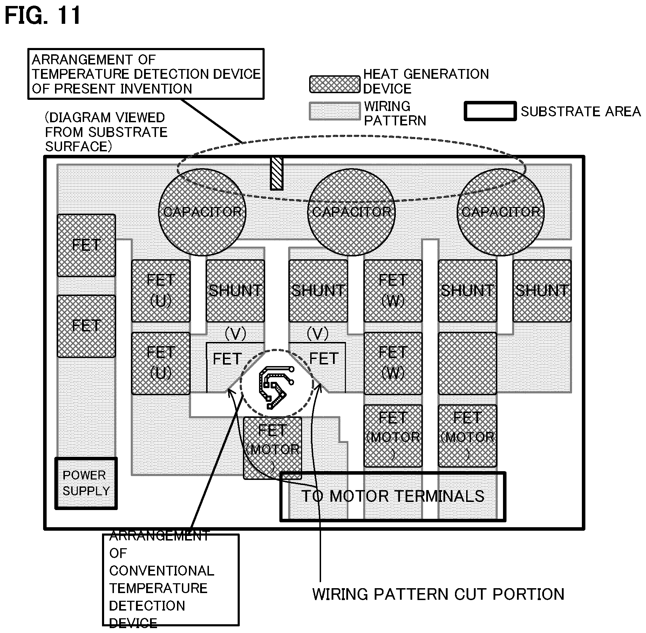

However, when the temperature detection circuit including the temperature detection device such as the thermistor is constituted, as shown in FIG.3, since the stable power supply voltage (for example, a constant 5 [V] power supply) is required, the electrical conductive wiring pattern which is used in the inverter in which the heat is generated is electrically insulated to the circuit including the temperature detection device. That is, in order to accurately detect the temperature, it is preferred that the temperature detection device such as the thermistor 120 be disposed in the vicinity of the FETs. Because the power supply voltage of the temperature detection device is independent of the power supply VR of the inverter 106, as shown in FIG.4, the temperature detection device (the thermistor 120) should separately be disposed. Thereby, in the general multilayer substrate and the like, since the heat generated in the inverter is transferred to the temperature detection device via an insulating base material which has a low heat conductive characteristic (for example, a synthetic resin), the heat generated in the inverter is not efficiently transferred to the temperature detection device, and the accurate temperature detection cannot be performed due to a deterioration of the temperature characteristic in the base material. Thus, the above method has a problem that the appropriate overheat protection cannot be performed to the components which should be protected. In a case that the temperature detection device is disposed in the vicinity of the FETs, the ingenuity that a part of the large current wiring patterns are cut, is required (refer to a wiring pattern cut portion in FIG.11).

Further, in order to resolve the above problems, a surplus heat conductive material (a thermal grease and the like) and a special substrate process (VIA and the like) are required. These materials and processes cause a cost increase in manufacturing.

FIG.4 is a substrate cross-sectional diagram showing a conventional disposition structure example of the thermistor. This example shows a four-layer substrate (a multilayer substrate) (the conductor layers 122-1 to 122-4 and the insulating layer 123-1 to 123-3). Heat generation components 121 such as the FETs are disposed on the top conductor layer 122-1 by using the soldering 121A. The thermistor 120 is disposed at the portion isolated from the heat generation components 121 on the top conductor layer 122-1 by using the soldering 121A, and the thermal VIA 124 is dissipated to the dissipation member. The thermistor 120 is disposed at the isolated portion, arrows show the heat conductive direction at the various points, and there are the above-described problems in the temperature detection of this structure.

The List of Prior Art Documents

Patent Documents

> Patent Document 1: Japanese Patent No.3889562 B2
> Patent Document 2: Japanese Unexamined Patent Publication No.2013-187322 A
> Patent Document 3: Japanese Unexamined Patent Publication No.2013-62269 A

Summary of the Invention

Problems to be Solved by the Invention

In the semiconductor apparatus disclosed in Japanese Patent No.3889562 B2 (Patent Document 1), the semiconductor device and the temperature detection device are electrically connected on the metal layer of the circuit substrate, and the heat of the semiconductor device is transferred to the temperature detection device via the metal layer. However, in the apparatus of Patent Document 1, the electrical potential at the middle point of the arm is connected to one end of the thermistor. The level shift circuit is required in the above structure, and then there is a problem that the circuit configuration is complicated. Further, the portion which is a weakest to the heat in the circuit is not clarified. In order to perform the accurate overheat control, since the plural temperature detection devices are required, the manufacturing cost increases.

In the electronic components disclosed in Japanese Unexamined Patent Publication No.2013-187322 A (Patent Document 2), the thermal binding between the heat generation devices and the temperature detection device is enhanced by using the VIA and the heat conductive member. However, the cost in manufacturing the above structure increases.

In the semiconductor apparatus disclosed in Japanese Unexamined Patent Publication No.2013-62269 A (Patent Document 3), the layer including plural temperature detection devices (the plural thermistors) is sandwiched between the heat generation devices and the heat sink. In the apparatus of Patent Document 3, the three temperature detection devices are used. There are problems that the cost of the components and the cost in manufacturing the above apparatus increase and the time lag is occurred in detecting the transient thermal characteristics of the heat generation devices.

Recently, the electric power steering apparatus (EPS) increases in size, and a current passing through the motor becomes lager (e.g. about 120 [A]). Conventionally, the safer FET overheat protection is achieved by using the temperature detection value around the FETs and the estimation algorithm because of the above reasons. As a result, the performance passing the large current to the motor is suppressed. Since the time lag is occurred in the instantaneous detection in the temperature variations of the heat generation devices, the control that the current is passed instantaneously and the like cannot be adapted to the unique torque in the EPS (for example, the occurrence of locking and the like) . For example, in a case that the large current (e.g. 100 [A] or more) is passed in the FETs, it is preferred that the accuracy improvement of the temperature detection be achieved so that the transient heat instantaneously generating from the FETs can be detected.

The present invention has been developed in view of the above-described circumstances, and an object of the present invention is to provide the motor control unit that accurately performs the temperature detection of the inverter with a low cost configuration without the time delay and surly overheat-protection-controls the electronic components based on the detection temperature, and the electric power steering apparatus equipped with the motor control unit.

Means for Solving the Problems

The present invention relates to a motor control unit that driving-controls a motor by an inverter based on a current command value, the above-described object of the present invention is achieved by that: comprising a voltage detecting section to detect a power supply voltage of a power supply connected to the inverter, a temperature detection device disposed on a wiring pattern of a circuit substrate between the inverter and the power supply, a voltage-dividing circuit to divide with the power supply voltage using the temperature detection device and resistors, a temperature detecting section to detect a temperature of the wiring pattern based on a dividing voltage from the voltage-dividing circuit and a voltage detected value detected in the voltage detecting section, and an overheat protection control section to limit the current command value based on a temperature detected- value of the temperature detecting section, wherein the temperature detecting section detects the temperature of the wiring pattern using a predetermined equation or a data table in which data are preliminarily set without affecting the power supply voltage.

The above-described object of the present invention is efficiently achieved by that: wherein, in the circuit substrate, a thickness of the wiring pattern between the inverter and the power supply in which the temperature detection device is disposed, is uniform, and a width of the wiring pattern between the inverter and the power supply is narrower than widths of the wiring patterns of other portions; or wherein, in the circuit substrate, a width of the wiring pattern between the inverter and the power supply in which the temperature detection device is disposed, is uniform, and a thickness of the wiring pattern between the inverter and the power supply is thinner than thicknesses of the wiring patterns of other portions; or wherein the wiring pattern between the inverter and the power supply in which the temperature detection device is disposed, has a structure that heat is hardly dissipated at a back surface of the circuit substrate, at an interior of the circuit of the circuit substrate, or around the wiring pattern; or wherein at least one of a thermal VIA, a grease and a heat sink is used in a back surface of the circuit substrate; or wherein the circuit substrate is a multilayer substrate, and the temperature detection device is disposed on an outermost layer of the multilayer substrate; or wherein the temperature detection device is a thermistor.

Effects of the Invention

The large current is passed through the wiring pattern of the power supply line (VR) of the inverter which drives the motor, and the electronic components such as the FETs and the capacitors, and the circuit substrate itself having a resistance value generate the heat. In accordance with the control unit according to the present invention, the thermal binding between the electronic components and the temperature detection device is enhanced and the excellent temperature detection is realized by directly mounting the temperature detection element on the wiring pattern in which the heat generation components are mounted. Since the surplus heat conductive material (the thermal grease and the like) and a special substrate process (VIA and the like) are not required for the circuit substrate, a cost can be reduced, the isolated portion which is electrically insulated in the vicinity of the center of the inverter is not needed, and there is an advantage that a degree of freedom for the wiring pattern of the inverter is improved.
Further, secause the heat generation amount of the wiring pattern of the circuit substrate in the temperature detecting section on the power supply line is larger than those of other portions, a degree of freedom for designing the temperature threshold of the overheat protection function can be improved, and a highly reliable overheat protection function can be performed.

Brief Description of the Drawings

In the accompanying drawings:

FIG. 1 is a configuration diagram showing a general outline of an electric power steering apparatus;
FIG.2 is a block diagram showing a general configuration example of a control unit (ECU) of the electric power steering apparatus;
FIG.3 is a circuit diagram showing a configuration example of a motor control section of the electric power steering apparatus;
FIG.4 is a cross-sectional view of a substrate showing a conventional arrangement example of a thermistor;
FIG.5 is a block diagram showing a configuration example of the present invention;
FIG.6 is a cross-sectional view of a substrate showing an arrangement example of the thermistor according to the present invention;
FIG.7 is a connection diagram showing a configuration example of a voltage-dividing circuit;
FIG. 8 is a characteristic diagram showing an example of a data table of a temperature conversion;
FIGs. 9A and 9B are plan views showing an adjustment example of a heat generation amount of a wiring pattern in a circuit substrate;
FIGs. 10A, 10B, and 10C are cross-sectional views of the other adjustment example of the heat generation amount of the wiring pattern in the circuit substrate and FIG.10D is a partial plan view; and
FIG.11 is a plan view showing an example of arranging a temperature detection device of the present invention to the circuit substrate, in comparison with the conventional example.

Mode for Carrying Out the Invention

In an inverter of a motor control unit equipped with an EPS and the like, the present invention provides a motor driving unit having an excellent transient response of a temperature detection of a heat generation portion by directly connecting the electrical conductive wiring pattern (having an excellent heat conductivity) of a power supply line (a VR line) of an inverter in which heat is easily generated, to one contact point of a temperature detection device such as, for example, a thermistor, and connecting a power supply (VR) to the other contact point. Concretely, the first dividing voltage of a power supply voltage connected between the temperature detection device (the power supply side) and a resistor (a GND (ground) side) is detected, and the second dividing voltage of the power supply voltage connected between the power supply and a resistor which is connected to a ground is detected. An influence of voltage variation of the power supply is removed by dividing the first dividing voltage by the second dividing voltage, and then the temperature (the temperature of the wiring pattern which is connected to the one contact point of the temperature detection device) can be detected by the calculation or referring a data table of a temperature conversion. Normally, since the power supply voltage is substantially the same as a battery voltage of a vehicle, the voltage variation is large. Since the voltage variation due to the motor driving is remarkable, it is necessary to remove the variation of the power supply voltage, in order to perform the accurate temperature detection.

In the present invention, a shape of the wiring pattern is modified so that the heat generation amount of the electrical conductive wiring pattern of the power supply line, which is the temperature detection portion, becomes large. Concretely, the width of the wiring pattern of the circuit substrate in which the temperature is detected is partially narrow, the number of thermal VIAs of the wiring pattern in which the temperature is detected is adjusted, or the heat around the wiring pattern in which the temperature is detected is hardly dissipated to a heat sink. Thereby, overheat protection having the high degree of freedom can be performed by increasing the heat generation of the wiring pattern of the power supply line, and the temperature of the components by which the inverter is constituted can surely be prevented from becoming higher than the heat resistant temperature of the components.

In the inverter which drives the motor, by directly disposing the temperature detection device on the wiring pattern of the power supply line in which the heat is easily generated, and detecting the temperature, the present invention provides the motor control unit which has a high thermal binding between the heat generation portion and the temperature detection device, and an excellent temperature detection performance. Since the surplus heat conductive material and the special substrate process are not required for the circuit substrate in order to enhance the thermal binding between the heat generation portion and the temperature detection device, a cost can be reduced. Conventionally, in order to enhance the heat transfer of the temperature detection device from the heat generation portion, the thermal VIA and the heat conductive member are additionally provided. Contrarily, in the present invention, an inclusion such as thermal grease is not existed from the heat generation section to the temperature detection device, and the new thermal via (the new thermal VIA) and the like are not provided to increase the heat transfer efficiency between the heat generation portion and the temperature detection device, neither.

Furthermore, in the present invention, the design is performed as follows. The width of the wiring pattern of the temperature detecting section is narrow and the heat around the detection portion is hardly dissipated to the heat sink and the like. Thereby, the heat is intentionally and largely generated at the temperature detecting section, and the heat generation amount can be adjusted. Based on the detected temperature, a degree of freedom for designing a threshold of the overheat protection can be improved, and the temperature of the components by which the inverter is constituted can be prevented from becoming higher than the heat resistant temperature of the components.

Embodiments according to the present invention will be described with reference to the drawings in detail.

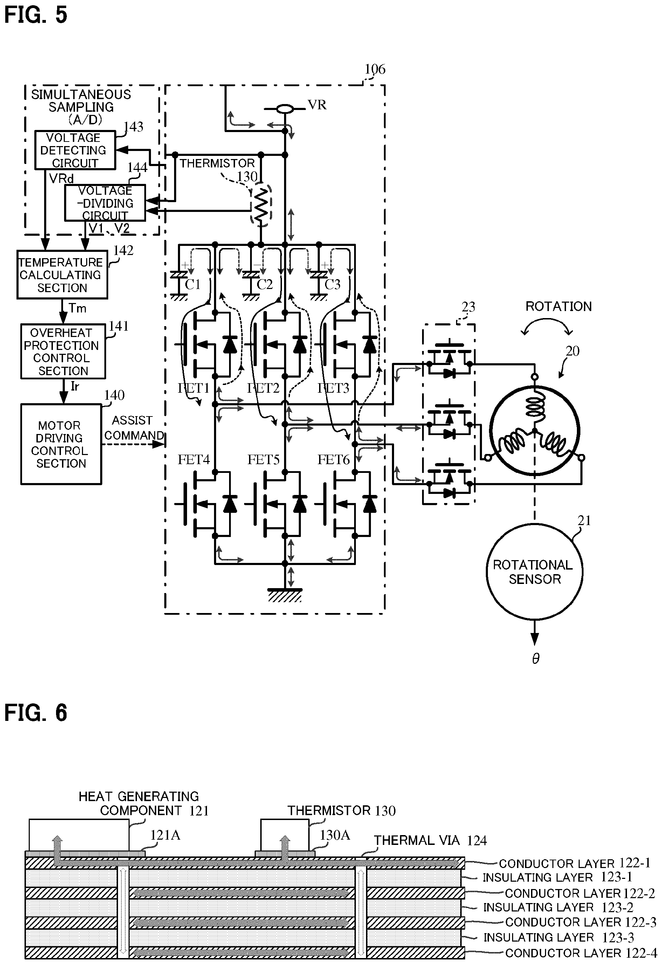

FIG.5 shows a configuration example of the present invention, corresponding to FIG.3. The thermistor 130 as the temperature detection device is connected to the power supply line of the inverter 106, and large-capacitance capacitors C1 to C3 which are connected to the power supply line are disposed at respective arms. In the present invention, a power supply voltage for the thermistor 130 is not disposed, and the power supply voltage VR which is used in the inverter 106 is applied to the thermistor 130. The large-capacitance capacitors C1 to C3 are constituted by electrolytic capacitors, conductive polymer hybrid electrolytic capacitors, or the like. Arrows in the inverter 106 denote a direction of a current. Solid lines denote the direction of the current when the upper-arm FETs are turned-ON, and dashed lines denote the direction of the current passed through parasitic diodes when the upper-arm FETs are turned-OFF . As described above, since the currents are passed through the FETs by rotations of the motor 20 regardless of turning-ON or turning-OFF the FETs, the temperature of the wiring pattern of the power supply voltage VR increases. Therefore, it is important to accurately detect the temperature at the above portion. It is considered that the variation of the power supply voltage VR is large.

A voltage detecting section 143 to detect the power supply voltage and a voltage-dividing circuit 144 to divide with the power supply voltage using the thermistor 130 and resistors are connected to the inverter 106. The power supply voltage VRd detected at the voltage detecting section 143 and dividing voltages V1 and V2 of the voltage-dividing circuit 144 are inputted into a temperature detecting section 142, and the temperature detecting section 142 detects the temperature using a temperature conversion data table or the like. A temperature detection value Tm detected at the temperature detecting section 142 is inputted into an overheat protection control section 141, and the overheat protection control section 141 inputs a current limit value Ir to a motor driving control section 140. The motor driving control section 140 limits a current command value (an assist command) based on the current limit value Ir.

FIG. 6 shows an arrangement example of the thermistor 130, corresponding to FIG.4. The thermistor 130 is disposed on the wiring pattern by using a solder 130A. In this example, the thermal VIA is existed, but the thermal VIA may not be disposed.

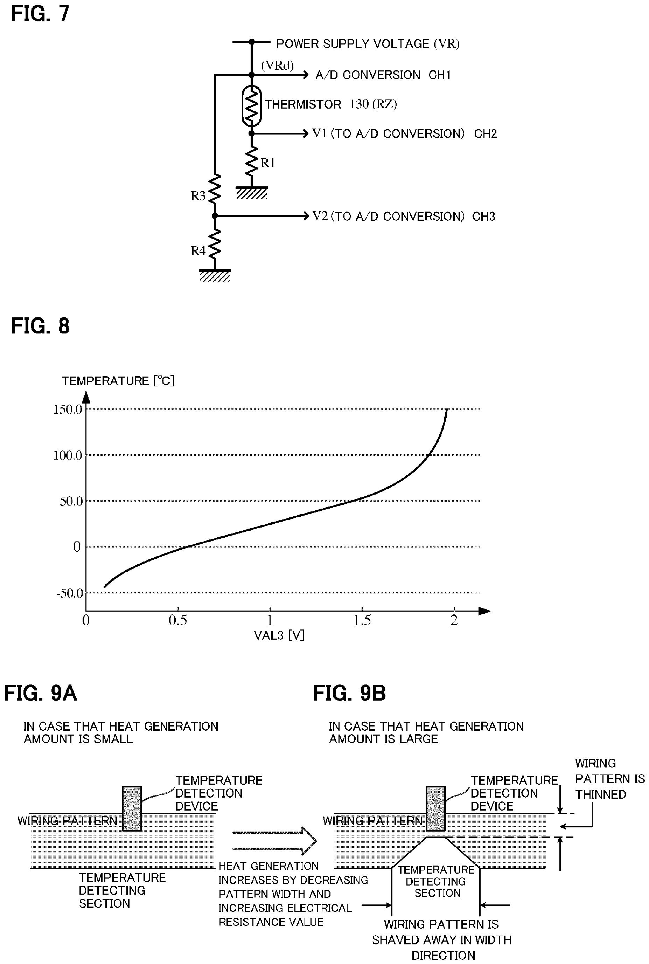

FIG. 7 shows a configuration example of the voltage-dividing circuit 144 and a connection example of the thermistor 130. One end of the thermistor 130 is connected to the power supply voltage VR, and the other end of the thermistor 130 is connected to the ground (GND) through the resistor R1. A voltage-dividing circuit of the resistors R3 and R4 is disposed between the power supply and the ground. Here, assuming that the power supply voltage and the resistor of the thermistor 130 are set to "VR" and "RZ", respectively, an output voltage V1 of the voltage-dividing circuit comprising the thermistor 130 and the resistor R1 is represented by a following Expression 1. The output voltage V1 is affected by the variation of the power supply voltage VR.

[Expression 1]

$$V1 = \frac{R1}{R1 + RZ} \times VR$$

The output voltage V2 of the voltage-dividing circuit comprising the resistors R3 and R4 is represented by the following Expression 2. As well, the output voltage V2 is affected by the variation of the power supply voltage VR.

[Expression 2]

$$V2 = \frac{R3}{R3 + R4} \times VR$$

The voltages V1 and V2 from the voltage-dividing circuit 144 are inputted into the temperature detecting 142, are performed an analog to digital conversion (an A/D conversion). The digital values of the voltages V1 and V2 are set to "VAL1" and "VAL2", respectively. A value VAL3 is obtained by dividing the digital value VAL1 by the digital value VAL2. That is, the value VAL3 is represented by the following Expression 3.

[Expression 3]

$$VAL3 = \frac{VAL1}{VAL2} = \frac{\dfrac{R1}{R1 + RZ} \times VR}{\dfrac{R3}{R3 + R4} \times VR} = \frac{R1}{R3} \times \frac{R3 + R4}{R1 + RZ}$$

In the above Expression 3, since the resistors R1, R3 and R4 are a fixed value and the term of the power supply voltage VR is removed, the value VAL3 is dependent on only the resistor RZ of the thermistor 130. Thus, by preliminarily preparing the data table with reference to a relationship between the resistor of the thermistor 130 and the temperature, or by performing the calculation, the temperature Tm can be detected. That is, as shown in FIG.8, by performing the temperature detection using the relationship between the value VAL3 and the temperature detection value Tm, even when the configuration including the power supply voltage whose voltage variation is large is used, the temperature can accurately be detected without being affected by the voltage variation. Generally, assuming that the thermistor resistance is set to "$R_0$" when the temperature is $T_0$ [K], the thermistor resistance RZ when the temperature is T [K] is represented by the following Expression 4.

[Expression 4]

$$RZ = R_0 \cdot \exp\left\{ B\left( \frac{1}{T} - \frac{1}{T_0} \right) \right\}$$

Here, "B" is called as a B-constant of the thermistor, and the values of "B" are different in the respective thermistors. Further, a Steinhart-Hart Expression (Expression 5) whose approximate accuracy is higher than the Expression 4 is used as an approximate expression of the temperature resistance characteristic of the thermistor.

[Expression 5]

$$\frac{1}{T} = a + b1_n (RZ) + c1_n^{3} (RZ)$$

Here, "a", "b" and "c" are called as Steinhart-Hart parameters, and those values are specified in the respective thermistors.

It is understood that the thermistor resistance RZ is dependent on the temperature from the Expression 4, and the thermistor temperature T, that is, the temperature of the wiring pattern on which the thermistor 130 is disposed is obtained by measuring the thermistor resistance RZ from the Expression 5. A periodic detection is not used in the present invention. A detection of a channel CH1 that the power supply voltage VR (VRd) is measured and the A/D conversion is performed to the measured voltage VR (VRd), a detection of a channel CH2 that the divider voltage value V1 of the thermistor 130 is measured and the A/D conversion is performed to the measured voltage V1, and a detection of a channel CH3 that the dividing voltage value V2 of the voltage dividing circuit 144 is measured and the A/D conversion is performed to the measured voltage V2 are simultaneously sampled. The temperature calculating section 142 detects the temperature of the thermistor 130 by using the above expression or by using the preliminarily calculated temperature measurement data table.

The overheat protection control section 141 suppresses the temperature increase of the components of the inverter 106 by slightly limiting the current command value or stopping the motor driving depending on the temperature detected value Tm. That is, in accordance with the temperature detected value Tm, the current command value (the assist command) is reduced and is limited, or the motor driving is stopped. Besides, the stop of the motor driving may be performed when the temperature detection value Tm is higher than a predetermined value Tm2.

Further, a correlation value between the temperature increase of the components of the inverter 106 and the temperature detected value Tm is preliminarily analyzed by an experiment or the like. A temperature that is higher than the temperature detection value Tm1 when the temperature of any of the components is the same as the heat resistant temperature, is set to an overheat protection start temperature (a threshold temperature). Thereby, the temperatures of the components can be prevented from exceeding the heat resistant temperature.

When the motor current control is performed, the large current is often passed through the power supply line of the inverter. The heat is easily generated in the power supply line of the inverter by the heat transfer from the pattern resistance of the circuit substrate and the FETs by equivalent series resistances (ESR) of the electrolytic capacitors (the resistances due to losses of dielectrics, electrodes and the like). Therefore, the countermeasures that the pattern width of the power supply line is widened, the thermal VIA is further disposed, or the heat is dissipated from the circuit substrate to the case (the heat sink) through the heat conductive material, can be adopted. However, in a case that the heat dissipation in the wiring pattern of the power supply line is exceeded, only the low temperature can be detected in spite of generating the heat from other components of the inverter and then the appropriate overheat protection cannot be performed. Consequently, in order that the moderate heat in the wiring pattern of the power supply line which is the temperature detecting section is generated (the temperature range is not surely higher than the heat resistant temperature of the circuit substrate), in the present invention, an adjustment is performed by using the following methods (1) to (4).

(1) As shown in FIGs.9A and 9B, the width of the wiring pattern of the power supply line at the portion where the temperature detection device is disposed is narrower than the widths at other portions. In a case that the thickness of the wiring pattern is uniform, when the width of the wiring pattern is narrower, the electrical resistance is larger and the heat generation in the wiring pattern due to the current increases . Since the width of the wiring pattern at the portion where the temperature detection device is disposed is the same as the widths at other portions, the heat generation amount of the temperature detection section is small. Contrarily, as shown in FIG.9B, the wiring pattern at the portion where the temperature detection device is shaved away in a V-shape from one side surface, the width of the wiring pattern becomes narrower, and the heat generation amount of the temperature detecting section can be larger. The width of the wiring pattern may be uniform and the thickness of the wiring pattern may be thinner, based on the same theory.

(2) The number of the thermal VIAs of the wiring pattern of the power supply line shown in FIG.6 is reduced, and the heat generation amount of the temperature detecting section can be larger. Contrarily, the number of the thermal VIAs increases, and the heat generation amount of the temperature detecting section can be smaller.

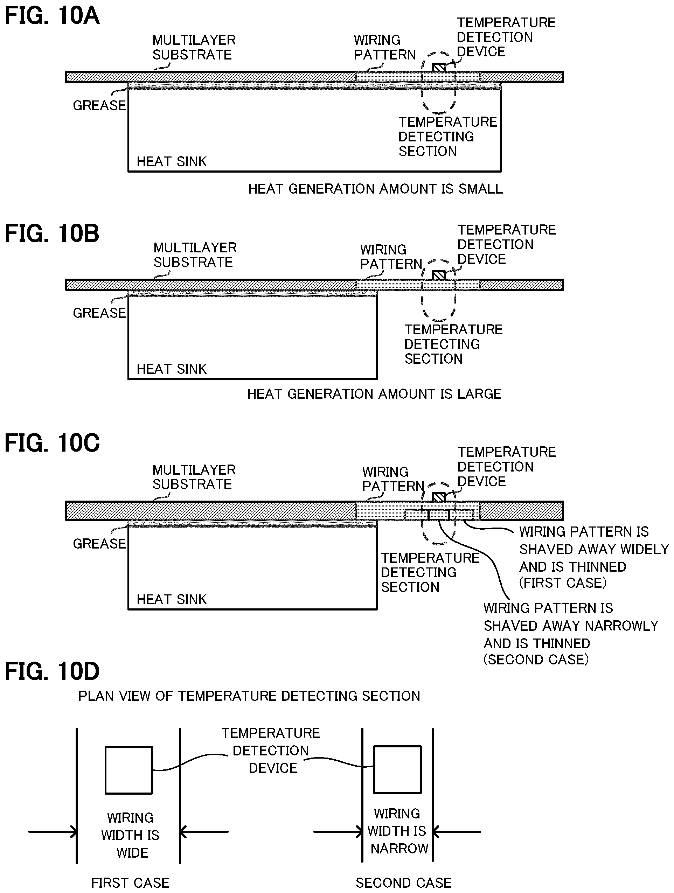

(3) As shown in FIGs. 10A, 10B, 10C and 10D, the heat dissipation amount from the circuit substrate of the wiring pattern to the case is adjusted, and the heat generation amount of the temperature detecting section can be adjusted. That is, in FIG.10A, since the heat is dissipated to the back surface of the portion where the temperature detection device is disposed through the grease and the heat sink, the heat generation amount can slightly be adjusted. In FIG.10B, since the heat dissipation material is not disposed on the back surface of the portion where the temperature detection device is disposed, the heat generation amount can largely be adjusted.

(4) In the embodiment of FIG.10B, as shown in FIGs. 10C and 10D, the width of the wiring pattern may be widened (the first case), or the width of the wiring pattern may be narrowed (the second case). Further, the narrow width in which the above wiring pattern is shaved away may be combined.

By using the above methods (1) to (4), the heat generation amount of the wiring pattern of the power supply line can adjusted. Thereby, the threshold temperature of the overheat protection can be easily designed, a degree of freedom for designing the threshold of the overheat protection can be improved, and the temperature of the components by which the inverter is constituted can be prevented from becoming higher than the heat resistant temperature of the components.

FIG.11 shows an example of arranging the temperature detection device to the circuit board according to the present invention. In the present invention, the temperature detection device is disposed at an edge portion of the circuit board. Conventionally, the temperature detection device is disposed at a center portion of the circuit substrate. The reason is described as follows.

The heat generation devices are disposed on the circuit substrate of a power section, and the center of the circuit substrate can be a portion where the temperature is highest. By disposing the temperature detection device at the center of the power section, distances from the respective devices to the temperature detection device are averaged, and the temperatures of the respective heat generation devices can be moderately acquired. In other words, the state that the distance from the component device to the temperature detection device is too far and the temperature of the component device cannot be detected is hardly occurred. In the present invention, the portion which is a weakest to the heat in the circuit is intentionally set to the VR pattern (the wiring pattern of the power supply line) . If the temperature at the thermal weakest portion is detected, since the temperatures of other devices are equal to or lower than the temperature at the portion which is the weakest to the heat in the circuit, normally, it is enough that the temperature detection is performed on the VR pattern which is not wired at the center of the power section, and it is not required that the temperature detection device is disposed at the center of the substrate of the power circuit section.

As well, in the above embodiment, the thermistor is exemplified as the temperature sensor. A temperature measuring resistor, a thermocouple, an integrated circuit (IC) temperature sensor in which the temperature characteristic of the transistor is utilized, a quartz thermometer in which a Y-cut crystal is utilized, and the like can be used as the temperature sensor.

In the embodiment of the present invention, the thermal VIA and the grease are shown for simply dissipating the heat of the system. These are not served for dissipating the heat from the heat generation portion to the temperature detection device.

Explanation of Reference Numerals

| | |
|---|---|
| 1 | handle (steering wheel) |
| 2 | column shaft (steering shaft, handle shaft) |
| 10 | torque sensor |
| 12 | vehicle speed sensor |
| 20 | motor |
| 100 | control unit (ECU) |
| 101 | current command values calculating section |
| 104 | PI-control section |
| 105 | PWM-control section |
| 106, 106A | inverter |
| 110 | compensation signal generating section |
| 120, 130 | thermistor |
| 121 | heat generation component |
| 122-1, 122-2, 122-3, 122-4 | conductor layer |
| 123-1, 123-2, 123-3 | insulating layer |
| 140 | motor driving control section |
| 141 | overheat protection control section |
| 142 | temperature detecting section |
| 143 | voltage detecting section |
| 144 | voltage-dividing circuit |

**Claims**

1. A motor control unit that driving-controls a motor by an inverter based on a current command value, comprising:

a voltage detecting section to detect a power supply voltage of a power supply connected to said inverter;
a temperature detection device disposed on a wiring pattern of a circuit substrate between said inverter and said power supply;

a voltage-dividing circuit to divide with said power supply voltage using said temperature detection device and resistors;

a temperature detecting section to detect a temperature of said wiring pattern based on a dividing voltage from said voltage-dividing circuit and a voltage detected-value detected in said voltage detecting section; and

an overheat protection control section to limit said current command value based on a temperature detected-value of said temperature detecting section,

wherein said temperature detecting section detects said temperature of said wiring pattern using a predetermined equation or a data table in which data are preliminarily set without affecting said power supply voltage.

2. The motor control unit according to Claim 1,
wherein, in said circuit substrate, a thickness of said wiring pattern between said inverter and said power supply in which said temperature detection device is disposed, is uniform, and a width of said wiring pattern between said inverter and said power supply is narrower than widths of said wiring patterns of other portions.

3. The motor control unit according to Claim 1,
wherein, in said circuit substrate, a width of said wiring pattern between said inverter and said power supply in which said temperature detection device is disposed, is uniform, and a thickness of said wiring pattern between said inverter and said power supply is thinner than thicknesses of said wiring patterns of other portions.

4. The motor control unit according to any one of Claims 1 to 3,
wherein said wiring pattern between said inverter and said power supply in which said temperature detection device is disposed, has a structure that heat is hardly dissipated at a back surface of said circuit substrate, at an interior of said circuit of said circuit substrate, or around said wiring pattern.

5. The motor control unit according to any one of Claims 1 to 4,
wherein at least one of a thermal VIA, a grease and a heat sink is used in a back surface of said circuit substrate.

6. The motor control unit according to any one of Claims 1 to 5,
wherein said circuit substrate is a multilayer substrate, and said temperature detection device is disposed on an outermost layer of said multilayer substrate.

7. The motor control unit according to Claim 6,
wherein said temperature detection device is a thermistor.

8. An electric power steering apparatus, comprising said motor control unit according to any one of Claims 1 to 7.

# FIG. 1

**PRIOR ART**

## FIG. 2

PRIOR ART

EP 3 493 390 A1

## FIG. 3

**PRIOR ART**

## FIG. 4

HEAT
GENERATING
COMPONENT 121    THERMISTOR 120

THIS PORTION IS
MADE OF RESIN
AND IS LOW
HEAT CONDUCTIVITY

121A    120A    THERMAL VIA 124

CONDUCTOR LAYER 122-1
INSULATING LAYER 123-1
CONDUCTOR LAYER 122-2
INSULATING LAYER 123-2
CONDUCTOR LAYER 122-3
INSULATING LAYER 123-3
CONDUCTOR LAYER 122-4

**PRIOR ART**

## FIG. 5

SIMULTANEOUS SAMPLING (A/D)

VOLTAGE DETECTING CIRCUIT — 143

VRd

144 — VOLTAGE-DIVIDING CIRCUIT

THERMISTOR 130

V1 V2

TEMPERATURE CALCULATING SECTION — 142

Tm

OVERHEAT PROTECTION CONTROL SECTION — 141

Ir

MOTOR DRIVING CONTROL SECTION — 140

ASSIST COMMAND

106

VR

C1  C2  C3

FET1  FET2  FET3

FET4  FET5  FET6

23

ROTATION

20

ROTATIONAL SENSOR — 21

θ

## FIG. 6

HEAT GENERATING COMPONENT 121

THERMISTOR 130

121A

130A

THERMAL VIA 124

CONDUCTOR LAYER 122-1
INSULATING LAYER 123-1
CONDUCTOR LAYER 122-2
INSULATING LAYER 123-2
CONDUCTOR LAYER 122-3
INSULATING LAYER 123-3
CONDUCTOR LAYER 122-4

## FIG. 7

POWER SUPPLY VOLTAGE (VR)

(VRd) → A/D CONVERSION CH1

THERMISTOR 130 (RZ)

V1 (TO A/D CONVERSION) CH2

R1

R3

V2 (TO A/D CONVERSION) CH3

R4

## FIG. 8

TEMPERATURE [°C]

VAL3 [V]

## FIG. 9A

IN CASE THAT HEAT GENERATION
AMOUNT IS SMALL

TEMPERATURE
DETECTION
DEVICE

WIRING PATTERN

TEMPERATURE
DETECTING
SECTION

HEAT GENERATION
INCREASES BY DECREASING
PATTERN WIDTH AND
INCREASING ELECTRICAL
RESISTANCE VALUE

## FIG. 9B

IN CASE THAT HEAT GENERATION
AMOUNT IS LARGE

TEMPERATURE
DETECTION
DEVICE

WIRING
PATTERN IS
THINNED

WIRING PATTERN

TEMPERATURE
DETECTING
SECTION

WIRING PATTERN IS
SHAVED AWAY IN WIDTH
DIRECTION

# FIG. 10A

MULTILAYER
SUBSTRATE

WIRING
PATTERN

TEMPERATURE
DETECTION
DEVICE

GREASE

HEAT SINK

TEMPERATURE
DETECTING
SECTION

HEAT GENERATION AMOUNT IS SMALL

# FIG. 10B

MULTILAYER
SUBSTRATE

WIRING
PATTERN

TEMPERATURE
DETECTION
DEVICE

GREASE

HEAT SINK

TEMPERATURE
DETECTING
SECTION

HEAT GENERATION AMOUNT IS LARGE

# FIG. 10C

MULTILAYER
SUBSTRATE

WIRING
PATTERN

TEMPERATURE
DETECTION
DEVICE

GREASE

HEAT SINK

TEMPERATURE
DETECTING
SECTION

WIRING PATTERN IS
SHAVED AWAY WIDELY
AND IS THINNED
(FIRST CASE)

WIRING PATTERN IS
SHAVED AWAY NARROWLY
AND IS THINNED
(SECOND CASE)

# FIG. 10D

PLAN VIEW OF TEMPERATURE DETECTING SECTION

TEMPERATURE
DETECTION
DEVICE

WIRING
WIDTH IS
WIDE

WIRING
WIDTH IS
NARROW

FIRST CASE

SECOND CASE

# FIG. 11

ARRANGEMENT OF
TEMPERATURE DETECTION DEVICE
OF PRESENT INVENTION

HEAT GENERATION
DEVICE

WIRING
PATTERN

SUBSTRATE AREA

(DIAGRAM VIEWED
FROM SUBSTRATE
SURFACE)

CAPACITOR  CAPACITOR  CAPACITOR

FET
FET (U)  SHUNT  SHUNT  FET (W)  SHUNT  SHUNT
FET
(V)  (V)
FET (U)  FET  FET  FET (W)
FET (MOTOR)  FET (MOTOR)  FET (MOTOR)
POWER SUPPLY
TO MOTOR TERMINALS

ARRANGEMENT
OF
CONVENTIONAL
TEMPERATURE
DETECTION
DEVICE

WIRING PATTERN CUT PORTION

## INTERNATIONAL SEARCH REPORT

| International application No. |
|---|
| PCT/JP2017/032334 |

A. CLASSIFICATION OF SUBJECT MATTER
Int. Cl. H02M7/48(2007.01)i

According to International Patent Classification (IPC) or to both national classification and IPC

B. FIELDS SEARCHED

Minimum documentation searched (classification system followed by classification symbols)
Int. Cl. H02M7/48

Documentation searched other than minimum documentation to the extent that such documents are included in the fields searched
Published examined utility model applications of Japan    1922-1996
Published unexamined utility model applications of Japan   1971-2017
Registered utility model specifications of Japan          1996-2017
Published registered utility model applications of Japan   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-51047 A (CALSONIC KANSEI CORP.) 09 March 2017, entire text, all drawings (Family: none) | 1-8 |
| A | JP 2002-76868 A (INTERNATIONAL BUSINESS MACHINES CORPORATION) 15 March 2002, entire text, all drawings & US 2002/0021539 A1, entire text, all drawings | 1-8 |
| A | US 2005/0194635 A1 (INFINEON TECHNOLOGIES AG) 08 September 2005, entire text, all drawings & DE 10361714 A1 | 1-8 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16.11.2017 | 28.11.2017 |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3889562 B
- JP 2013187322 A
- JP 2013062269 A